# EUROPEAN PATENT SPECIFICATION

(11) **EP 2 835 244 B1**
(45) Date of publication and mention of the grant of the patent: **06.03.2019**
(21) Application number: 13771924.1
(22) Date of filing: 02.04.2013
(51) Int. Cl.: B29C 45/14, B29C 45/26, B29K 105/20, B29L 9/00, B29L 31/30

(54) **PLANAR BODY PROVIDED WITH RESIN FRAME AND METHOD FOR PRODUCING PLANAR BODY PROVIDED WITH RESIN FRAME**
PLANARER KÖRPER MIT EINEM KUNSTHARZRAHMEN UND VERFAHREN ZUR HERSTELLUNG DES PLANAREN KÖRPERS MIT DEM KUNSTHARZRAHMEN
CORPS PLANAIRE DOTÉ D'UN CADRE EN RÉSINE ET PROCÉDÉ DE FABRICATION D'UN CORPS PLANAIRE DOTÉ D'UN CADRE EN RÉSINE

(30) Priority: 06.04.2012 JP 2012087787
(43) Date of publication of application: 11.02.2015
(73) Proprietor: AGC Inc., Tokyo 100-8405 (JP)
(72) Inventor: KONDOU, Takanobu, Tokyo 100-8405 (JP); YADA, Kunihiro, Tokyo 100-8405 (JP); EGUCHI, Yuya, Tokyo 100-8405 (JP); SAWAYAMA, Hiroshi, Tokyo 100-8405 (JP); KAWASHIMA, Kunihiko, Tokyo 100-8405 (JP)
(74) Representative: Müller-Boré & Partner Patentanwälte PartG mbB
(86) International application number: PCT/JP2013/060131
(87) International publication number: WO 2013/151071

(56) References cited:
- EP-A1- 0 570 598
- EP-A1- 1 199 203
- EP-A1- 2 253 447
- DE-C1- 19 949 539
- GB-A- 2 139 549
- JP-A- H07 323 727
- JP-A- 2002 129 839
- JP-A- 2008 273 132
- JP-A- 2008 273 132
- JP-A- 2009 269 381
- US-A- 5 730 926
- US-A1- 2008 213 545
- US-B1- 6 413 347

## Description

The present invention relates to a plate-like body with a resin frame attached thereto and a process for producing the plate-like body.

With regard to the process for producing a glass sheet for a vehicle window, such as a windshield or a sidelite as a vehicle window of, e.g. an automobile, there has been known a production process called the MAW system (Japanese registered trademark, Module Assy Window) disclosed in, e.g. Patent Document 1.

A glass sheet with a resin frame attached thereto produced by the MAW system has a resin frame of a thermoplastic resin attached to a peripheral portion thereof such that the resin frame is disposed so as to sandwich the peripheral portion of the glass sheet and is fixed to the glass sheet.

A device for producing a glass sheet with a resin frame attached thereto by using the MAW system includes a mold having at least a top die and a bottom die such that a cavity space is formed between the top die and the bottom die in order to dispose a portion of a glass sheet close to a peripheral portion thereof and a resin frame as disclosed by Patent Document as well. A molten thermoplastic resin material is injected into the cavity space through an injection gate of the mold such that the cavity space is filled with the thermoplastic resin material. After that, the thermoplastic resin material is solidified to integrate the thermoplastic resin material with the glass sheet. Thus, a glass sheet with a resin frame attached thereto is produced such that the resin frame has been integrally formed on a peripheral portion thereof.

By the way, in the conventional production processes using the MAW system, it has been difficult to form a solid thick wall part in a resin frame where an imaginary inscribed circle inscribed in the resin frame has a diameter size of at least of 7 mm for the purpose of preventing a sink mark from being caused on a visible surface.

From the point of view that the provision of a thick wall part in the resin frame so as to have at least such a size increases the freedom of design of a glass sheet with a resin frame attached thereto and enhances the rigidity of the resin frame per se without using a metal or resin insert, it has been desired to provide the resin frame with such a thick wall part. Because a glass sheet with a resin frame attached thereto as an exterior part for automobiles is required to have a visible surface difficult to form in many cases, such a visible surface has been supposed to satisfy the requirements by providing the resin frame with such a thick wall part even in such cases.

Further, Patent Document 2 discloses a glass sheet with a resin frame attached thereto, which includes a synthetic resin frame having an excellent appearance without a sink mark or the like on the surface. The resin frame is not, however, solid because of having an internal cavity formed therein so as to continuously extend therealong. For this reason, the resin frame disclosed in Patent Document 2 cannot enhance the rigidity of the resin frame even if the resin frame satisfies the above-mentioned size requirement.
Patent Document 1: JP-A-7-144338
Patent Document 2: JP-A-7-323727
JP 2008 273132 A describes an injection mold used for manufacturing framed glass.

The present invention has been proposed in consideration of such circumstances. It is an object of the present invention to provide a plate-like body with a resin frame attached thereto, the resin frame having a solid thick wall part at least partly formed therein, and a process for producing the plate-like body with a resin frame attached thereto.

The solution to the above technical problem is achieved by the embodiments characterized in the claims. In particular, in order to attain the above-mentioned object, the present invention provides a plate-like body with a resin frame attached thereto, which has a resin frame integrally formed on a peripheral portion of the plate-like body by injection molding, the resin frame including a solid thick wall part where an imaginary inscribed circle inscribed in the resin frame has a diameter of at least of 7 mm, wherein the resin frame has a pressed mark at least partly formed on an invisible surface side thereof.

In a preferred mode of the present invention, the thick wall part has a pressed mark at least partly formed on an invisible surface side thereof.

The provision of the pressed mark on the invisible surface side of the thick wall part can not only effectively control the creation of a sink mark on the thick wall part but also easily form the visible surface in a desired shape.

In a preferred mode of the present invention, the thick wall part of the resin frame is formed on an edge portion of at least one side of the plate-like body.

In a preferred mode of the present invention, a part of the resin frame formed on the one side of the plate-like body has the thick wall part occupying at most 50% of the length of the one side.

In a preferred mode of the present invention, a part of the resin frame formed on the one side of the plate-like body has a solid non-thick wall part where an imaginary inscribed circle inscribed in the resin frame has a diameter of less than 7 mm, and the thick wall part merges the non-thick wall part so as to have a wall thickness changing in a direction parallel to the one side, such that the ratio of the diameter of the imaginary inscribed circle inscribed in the thick wall part to the diameter of the imaginary inscribed circle inscribed in the non-thick wall part is greater than 2.

In a preferred mode of the present invention, the thickness of the non-thick wall part and the thickness of the thick wall part change within a range of at most 20 mm in a length direction of the one side of the resin frame.

In a preferred mode of the present invention, the thick wall part of the resin frame formed on the one side of the plate-like body has an inclined plane formed thereon so as to have an angle α of at least 60 degrees to a surface of the plate-like body.

In a preferred mode of the present invention, the plate-like body comprises a glass sheet for a vehicle, more preferably is a glass sheet for vehicles.

In order to attain the above-mentioned object, the present invention provides a process for producing a plate-like body with a resin frame attached thereto, including employing a mold to sandwich a portion of a plate-like body close to a peripheral portion thereof in order to form a cavity space between an inner surface of the mold and the peripheral portion of the plate-like body; injecting a synthetic resin material into the cavity space; and solidifying the synthetic resin material, followed by opening the mold to produce the plate-like body with a resin frame integrally formed thereon; the process further setting the volume of the cavity space such that the resin frame solidified in the cavity space includes a solid thick wall part where an imaginary inscribed circle inscribed in the resin frame has a diameter of at least of 7 mm, providing the mold with an inner surface for forming the cavity space, the inner surface including a visible surface forming part and an invisible surface forming part; forming the resin frame with a pressed mark so as to include the solid thick wall part with the imaginary inscribed circle inscribed in the resin frame having a diameter of at least of 7 mm by pressing at least a portion of the invisible surface of the synthetic resin material in the cavity space from a side of the mold with the invisible surface forming part thereon by a pressing structure before the synthetic resin material injected into the cavity space is solidified.

In a preferred mode of the present invention, the pressing structure presses at least a portion of an invisible surface of the thick wall part.

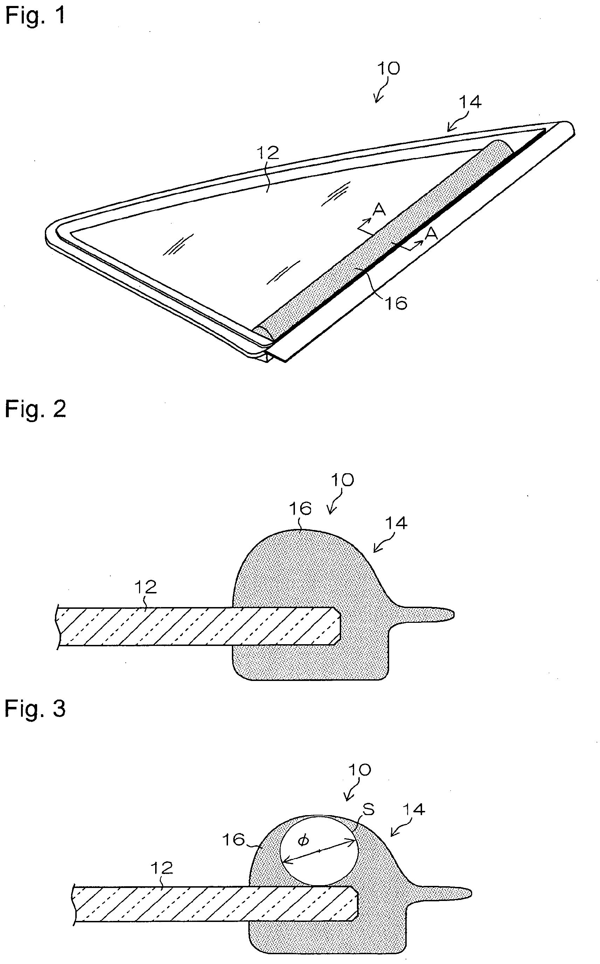

In Description, the thick wall part of the resin frame means a part of the resin frame that is solid and has such a thickness that an imaginary inscribed circle inscribed in the resin frame has a diameter of at least of 7 mm, and the non-thick wall part of the resin frame means a part of the resin frame that is solid and has such a thickness that an imaginary inscribed circle inscribed in the resin frame has a diameter of less than 7 mm. In other words, as shown in Fig. 3, when an imaginary inscribed circle S is depicted in the maximum size in a thickness direction of a resin frame 14 (i.e. in a vertical cross-sectional direction), a part of the resin frame where an imaginary inscribed circle has a diameter Φ of at least 7 mm is called a thick wall part while a part of the resin frame where an imaginary inscribed circle has a diameter Φ of less than 7 mm is called a non-thick wall part. Although Fig. 3 shows a case where the inscribed circle is depicted to extend along a section perpendicular to the length direction of one side of the resin frame 14, the direction of the section along which the inscribed circle is depicted to extend is not limited to such a direction. The present invention also embraces a case where the inscribed circle is depicted to extend along the section of other directions, such as a case where the inscribed circle is depicted to extend along a direction parallel to the length direction of one side of the resin frame 14.

Examples of the "plate-like body" referred to in Description include a transparent glass sheet and a translucent glass sheet. The plate-like body may be a color glass sheet or a resin sheet as long as it has a sufficient transparency. Examples of the glass sheet include a single layer of glass sheet and laminated glass. The glass sheet may be a glass sheet subjected to toughening and a glass sheet having a functional coating, such as heat reflective glass. The synthetic resin material may be a thermoplastic resin or the like. Examples of the thermoplastic resin material include a vinyl chloride resin and a normal thermoplastic resin selected from a group consisting of a polyolefin-based, a polyester-based, a polyamide-based and a polyurethane-based elastomer, and the thermoplastic resin material is not limited to these examples. Examples of the resin frame include a gasket, a molding, a weather strip and a rubber sealing, each of which is integrally formed on a peripheral portion of a plate-like body. The resin frame may be formed so as to extend in the entire peripheral portion of a plate-like body or be discontinuous partway along the entire peripheral portion or may be formed on only one side of a plate-like body or on more than one side of a plate-like body. The thick wall part may occupy at most 50% of the length of one side of a plate-like body. In such a case, the solid thick wall part can be formed on a resin frame without providing the resin frame with a sink mark because it becomes easy to concentrate the pressure of a synthetic resin material, during injection molding, in a cavity space for forming the thick wall part therein so as to occupy at most 50% of the length of one side of a plate-like body.

In accordance with the present invention, it is possible to increases the freedom of design of a plate-like body with a resin frame attached thereto and enhance the rigidity of the resin frame per se without using a metal or resin insert because the resin frame includes a highly rigid and solid thick wall part where an imaginary inscribed circle inscribed in the resin frame has a diameter size of at least of 7 mm. Further, although a plate-like body with a resin frame attached thereto as an exterior part for automobiles is required to have a visible surface difficult to form in many cases, such a visible surface can satisfy the requirements by providing the resin frame with such a thick wall part even in such cases.

In the process for producing a plate-like body with a resin frame attached thereto, the inner volume of the cavity space is set to provide the resin frame with a solid thick wall part where an imaginary inscribed circle inscribed in the resin frame has a diameter of at least of 7 mm. Further, the mold forming the cavity space has an inner surface including a visible surface forming part and an invisible surface forming part. Furthermore, a synthetic resin material, which is injected into the cavity space, is pressed from a side of the mold with the invisible surface forming part thereon toward a side of the mold with the visible surface forming part thereon by a pressing structure before the synthetic resin material in the cavity space is solidified.

Thus, the synthetic resin, which has not yet been solidified and is still soft, is pressed toward the side of the mold with the visible surface forming part thereon by the pressing structure, with the result that a part of the synthetic resin close to the visible surface forming part is cooled, being brought into close contact with the visible surface forming part. By this arrangement, the solid thick wall part having no sink mark thereon can be provided to the resin frame, which has been solidified on the visible surface forming part. The resin frame, which has been solidified, being pressed to the visible surface forming part, can have an improved appearance because the visible surface forming part has a good transcriptional property. Accordingly, it is possible to provide a plate-like body with a resin frame attached thereto in such a state that the resin frame has an excellent appearance when the plate-like body is mounted to a vehicle or the like.

Examples of the pressing structure include compressed air and a pressing member.

The pressing structure presses at least a portion of the invisible surface of the thick wall part. Thus, it is not only possible to effectively control the generation of a sink mark on the thick wall part but also easy to obtain a desired shape of visible surface because the pressed mark caused by the pressing structure is located on an invisible surface side of the thick wall part.

The visible surface means a visually recognizable part of a resin frame as appearance design in such a state that a plate-like body with the resin frame attached thereto has been mounted on a vehicle, and the invisible surface means a visually unrecognizable part of the resin frame in such a state that the plate-like body with the resin frame attached thereto has been mounted on the vehicle.

When compressed air is applied as the pressing structure, the cooling of the synthetic resin starts on a visible surface side thereof which is brought into close contact with the visible surface forming part of a mold because the compressed air forms an insulating layer on the invisible surface side. As a result, the volume-decrease caused by heat shrinkage of the synthetic resin material concentrates on the invisible surface side, with the result that the above-mentioned solid thick wall part having no sink mark can be provided to a resin frame which has been solidified on the visible surface side.

When a pressing member is applied as the pressing structure, it is preferred to press the synthetic resin material from an invisible surface side toward a visible surface side by the pressing member during a pressure keeping step and a cooling step in inject molding such that the inner pressure of the synthetic resin material is from 2 to 25 MPa. Thus, the above-mentioned solid thick wall part having no sink mark can be provided to a resin frame which has been solidified on the visible surface side.

In accordance with the present invention, it is possible to provide a plate-like body with a resin frame attached thereto, which includes a highly rigid and solid thick wall part where an imaginary inscribed circle inscribed in the resin frame has a diameter of at least of 7 mm and is capable of controlling the generation of a sink mark, and a process for producing the plate-like body with a resin frame attached thereto.
Fig. 1 is a perspective view showing the appearance of the glass sheet with a resin frame attached thereto according to an embodiment of the present invention;
Fig. 2 is a'cross-sectional view taken along line A-A of Fig. 1;
Fig. 3 is a schematic view representing the size of the resin frame integrally formed on a peripheral portion of the glass sheet by Φ in the cross-sectional view shown in Fig. 2;
Fig. 4 is a perspective view showing the glass sheet with a resin frame attached thereto according to another embodiment of the present invention, wherein the resin frame has a wall thickness gradually changing so as to include a thick wall part in a partial area thereof;
Fig. 5 is a cross-sectional view showing essential parts of a mold as a device for producing a glass sheet with a resin frame attached thereto according to the present invention;
Fig. 6 is a schematic view showing the volume of the cavity space shown in Fig. 5 by the diameter of an inscribed circle inscribed in the resin frame; and
Fig. 7 is a cross-sectional view showing essential parts of another mold as a device for producing a glass sheet with a resin frame attached thereto according to the present invention.

Now, preferred embodiments of the plate-like body with a resin frame attached thereto and the process for producing the plate-like body according to the present invention will be described in reference to the accompanying drawings.

Fig. 1 is a perspective view showing the appearance of the glass sheet 10 with a resin frame attached thereto according to an embodiment of the present invention. Fig. 2 is a cross-sectional view taken along line A-A of Fig. 1. Fig. 3 is a schematic view representing the size of the resin frame 14 integrally formed on a peripheral portion of the glass sheet 12 by the diameter of Φ of an imaginary inscribed circle S inscribed in the resin frame 14 in the cross-sectional view shown in Fig. 2.

Although explanation will be made about a plate-like body with a resin frame attached thereto wherein the plate-like body is a glass sheet, this type of plate-like body will be called a glass sheet with a resin frame attached thereto because the plate-like body is a glass sheet. When the plate-like body is a synthetic resin plate-like body, the following explanation is also applicable to such a case by replacing the wording "glass sheet" with "synthetic resin plate-like body".

As shown in Fig. 1, the glass plate 10 with a resin frame attached thereto is formed by providing the resin frame 14 to a peripheral portion of a glass plate 12 in a substantially angular shape. The resin frame 14 has a solid thick wall part 16 where an imaginary inscribed circle S inscribed in the resin frame 14 has a diameter Φ of at least 7 mm as shown in Fig. 3.

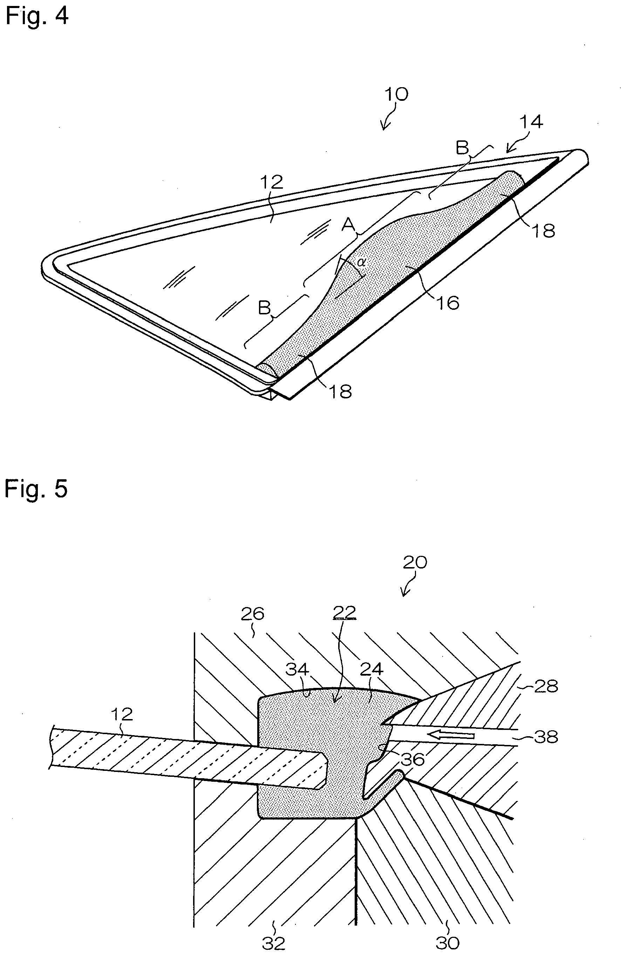

In the glass sheet 10 with a resin frame attached thereto according to the shown embodiment, as shown in Fig. 1, a part of the resin frame 14 lying at one side of the glass sheet 12 is formed as the thick wall part 16 while each of the parts of the resin frame 14 formed on the other sides are formed as having a smaller size than the thick wall part 16 (i.e. non-thick wall part). The thick wall part 16 may, however, form the entire resin frame 14 formed on the entire peripheral portion of the glass sheet 12. The thick wall part 16 may be partly formed on a part of the resin frame formed on one side of the glass sheet 12. In this case, that part of the resin frame 14 may have a thick wall part 16 (area A) partly formed therein so as to have a gradually changing thickness from non-thick wall parts 18 (areas B) as shown in Fig. 4, or may have a thick wall part 16 partly formed therein so as to protrude. When a part of the resin frame lying at one side of the glass sheet 12 has a thick wall part and non-thick wall parts, the thick wall part 16 preferably occupies at most 50% of the length of the one side of the glass sheet 12 (i.e. (the length of area A)/(the length of area B + the length of area A + the length of area B) is equal to at most 50% in the case shown in Fig. 4) and more preferably occupies at most 20%. The length of the thick wall part 16 is preferably at most 200 mm in the length of the one side of the glass sheet 12. By this arrangement, it becomes easy to concentrate the pressure of a synthetic resin material, during injection molding, in a cavity space for forming the thick wall part 16 therein. Thus, it becomes easy to provide the resin frame 14 with the solid thick wall part 16 such that the solid thick wall part has no sink mark thereon.

It is sufficient that the thick wall part 16 has at least a length suited to have a solid thickness such that the above-mentioned inscribed circle inscribed in the resin frame has a diameter of at least 7 mm. For example, the length of the thick wall part 16 is preferably at least 10 mm in the length of one side of the glass sheet 12 such that the pressing force to a synthetic resin material applied by a pressing structure can be easily transmitted up to a visible surface of the resin frame. Thus, the synthetic resin material can be also filled into every corner in the cavity space of a mold during inject molding, with the result that the thick wall part 16 can be formed in a solid form so as to have no surface defect and an excellent appearance.

In at least one side of the glass plate 12, the ratio of the diameter of the imaginary inscribed circle inscribed in the thick part 16 to the diameter of the imaginary inscribed circle inscribed in the non-thick wall part 18 is preferably greater than 2, more preferably greater than 3. In other words, when the maximum inscribed circle inscribed in the non-thick wall part 18 has a diameter of Φa while the maximum inscribe circle inscribed in the thick wall part 16 has a diameter of Φb, Φb/Φa is preferably greater than 2, more preferably greater than 3.

When a part of the resin frame formed on one side of the glass plate 12 has a thick wall part 16 and non-thick wall parts 18, the thick wall part 16 may be formed so as to protrude by changing the thickness of the non-thick wall parts 18 and the thickness of the thick wall part 16 within a range of at most 20 mm in a length direction of the one side of the resin frame. Both thicknesses is preferably changed within a range of at most 10 mm. To change the thicknesses within a range of at most 20 mm means that both thicknesses are changed such that the difference between the thickness of the thickest portion of the thick wall part 16 and the thickness of the non-thick wall parts adjacent to the thick wall part is within a range of at most 20 mm.

The thick wall part 18 may have an inclined plane formed thereon so as to have an angle α of at least 60 degrees or at least 70 degrees to a surface of the glass sheet 12 in a direction parallel to the one side of the glass sheet 12 with the thick wall part formed thereon.

The glass sheet 12 may be triangular or quadrangular and is not limited to have a specific shape. The glass sheet 12 may be flat or curved. The plate-like body may be in the form of not only a single glass sheet but also laminated glass, tempered glass and a double grazing unit. With regard to the material of the plate-like body, a synthetic resin plate-like body, a laminated sheet prepared by combining a synthetic resin plate-like body and a glass sheet and so on may be listed. The synthetic resin plate-like body may be, for example, a plate-like body made of a so-called organic transparent resin material, such as polycarbonate, polystyrene and polymethyl methacrylate, and may be constituted by laminating at least two sheets of these plate-like bodies. These plate-like bodies are applicable to a vehicle window, such as a rear windshield, a front windshield, roof glass, a sidelite, side door glass, an opera window, rear quarter glass and front bench glass.

On the other hand, the resin frame 14 generally means a gasket, a mold (molding), a weather-strip and a rubber sealing, which are used to close the gap between an opening formed in a vehicle body (not shown) and the glass sheet 12 that is used as a glass sheet for a vehicle window in one of the embodiments of the present invention. The resin frame 14 is a member produced mainly by a synthetic resin.

With regard to the molding position of the resin frame 14 to the edge of the glass sheet 12, the resin frame may be formed so as to extend in the entire peripheral portion of the glass sheet 12 or be discontinuous partway along the entire peripheral portion or may be formed on only one side or more than one side of the glass sheet.

The synthetic resin usable as the material of the resin frame 14 may be, for example, a thermoplastic resin or a thermosetting resin. As the thermoplastic resin, polyvinyl chloride (PVC), a copolymer of vinyl chloride and ethylene, a copolymer of vinyl chloride and vinyl acetate, a copolymer of vinyl chloride and propylene and a copolymer of vinyl chloride, ethylene and vinyl acetate are used in the form of a soft compound containing them singly or in combination of two or more as the base and an additive such as a plasticizer, and may be blended with another thermoplastic resin, such as chlorinated polyethylene, a urethane-modified vinyl chloride resin, a urethane resin, a polyester resin, a polymer liquid crystal, an acrylic resin, a rubber containing NBR, SBR or the like, EVA or ABS or a mixture of two or more of them. The thermosetting resin may be, for example, polyurethane, and can be molded by the RIM molding process.

The peripheral portion of the glass sheet 12 with the resin frame 14 integrally formed thereon may have an adhesive layer preliminarily formed thereon. The adhesive may be a urethane-based, phenol-based, acryl-based, nylon-based or epoxy-based adhesive, which comes in one package or two or more of packages.

Next, explanation will be made about a device for producing a glass sheet 12 with a resin frame attached thereto according to the embodiment and a process for producing the glass sheet.

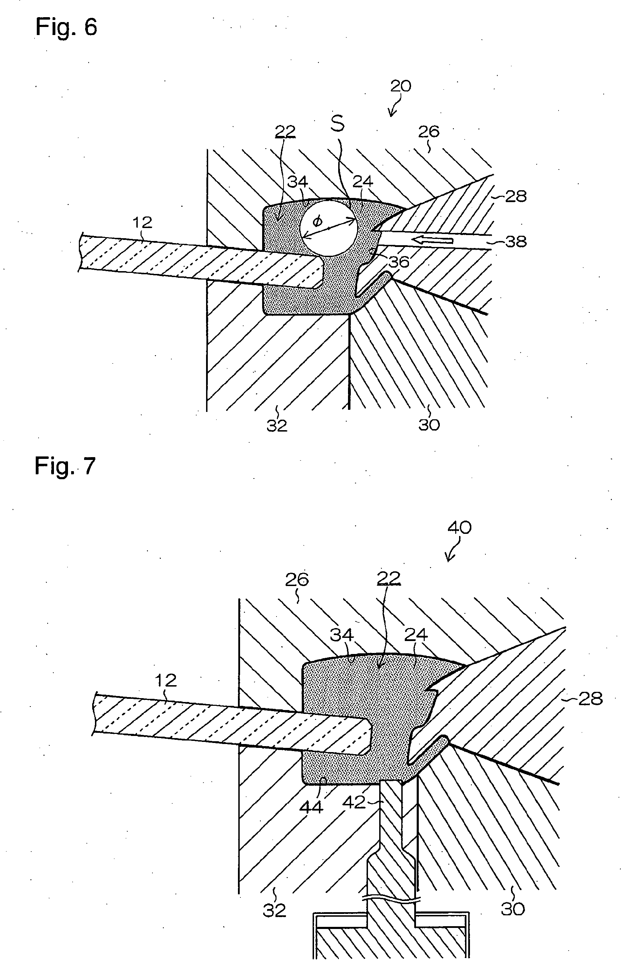

Fig. 5 is a cross-sectional view showing essential part of a mold 20 as the device for producing a glass sheet 10 with a resin frame attached thereto. Fig. 6 is a schematic view showing the scale representing the volume of the cavity space 22 of the mold 20 shown in Fig. 5 by the diameter Φ of the inscribed circle S inscribed in a synthetic resin material 24 (in other words, a synthetic resin material serving as the resin frame 14 after solidification).

The mold 20 is constituted by an upper die 26, and lower dies 28, 30 and 32 such that the cavity space 22 is defined by these dies 26, 28, 30 and 32. The die 26 has a visible surface forming part 34 formed on an inner side facing the cavity space 22 while the die 28 has an invisible surface forming part 36 formed on an inner side facing the cavity space 22. The mold 20 has an injection gate (not shown) formed therein to inject a molten synthetic resin material into the cavity space 22, and the die 28 has a nozzle 38 formed therein form compressed air (pressing structure).

The volume of the cavity space 22 is set such that the synthetic resin 14 solidified in the cavity space 22 includes a solid thick wall part 16 (see Fig. 3) where the imaginary inscribed circle S inscribed in the resin frame 14 has a diameter of at least 7 mm. The volume of the cavity space 22 is preferably set such that the resin frame includes a solid thick wall part 16 where the imaginary inscribe circle S inscribed in the resin frame 14 has a diameter of at least 7 mm and at most 14 mm.

Now, explanation will be made about a process for using the mold 20 to produce the glass sheet 10 with a resin frame attached thereto where the glass plate forms the plate-like body.

First, as shown in Fig. 5, a portion of the glass sheet 12 close to the peripheral portion is sandwiched by the dies 26, 28, 30 and 32 to form the cavity space 22 between the dies 26, 28, 30 and 32 and the peripheral portion of the glass sheet 12.

Then, a molten synthetic resin material 24 is injected into the cavity space 22 through the injection gate such that the synthetic resin material 24 is filled in the cavity space 22.

Next, compressed air is injected toward the cavity space 22 through the nozzle 38 of the die 28 before the synthetic resin material 24 injected into the cavity space 22 is solidified. In other words, the synthetic resin material 24 in the cavity space 22 is pressed from a side of the die 28 with the invisible surface forming part 36 thereon toward the visible surface forming part 34 of the die 26 by the compressed air. By the pressing force of the compressed air, the solid thick wall part 16 can be formed such that the imaginary inscribed circle inscribed in the resin frame 14 has a diameter of at least 7 mm.

After that, the dies 26, 28, 30 and 32 are opened. Thus, the glass sheet 10 with a resin frame attached thereto can be obtained such that the resin frame 14 including the thick wall part 16 is integrally molded to the glass sheet 12.

In the process for producing the glass sheet 10 with a resin frame attached thereto by making use of the compressed air, the synthetic resin material 24 that has not yet been solidified and is still soft is pressed toward the visible surface forming part 34 by the pressure of the compressed air, with the result that a part of the synthetic resin close to the visible surface forming part 34 is cooled, being brought into close contact with the visible surface forming part 34. Thus, the resin frame 14 solidified on the visible surface forming part 34 can be provided with the solid thick wall part 16 without a sink mark.

In other words, when compressed air is applied as the pressing structure, the cooling of the synthetic resin material 24 starts on a portion of the synthetic resin material close to the visible surface forming part 34 brought into close contact with the visible surface forming part 34 because the compressed air forms an insulating layer on the inner side of the mold with the invisible surface forming part 36 thereon. As a result, the volume-decrease caused by heat shrinkage of the synthetic resin material 24 concentrates on a portion of the synthetic resin material close to the invisible surface forming part 36. Thus, the solid thick wall part having no sink mark can be provided to the resin frame 14 which has been started being solidified on the inner side of the die with the visible surface forming part 34 thereon.

The resin frame 14, which has been solidified, being pressed to the visible surface forming part 34, has an improved appearance between the visible surface forming part 34 has a good transcriptional property. Thus, the glass sheet with a resin frame attached thereto 10 can be provided so as to have an excellent appearance when being mounted to a vehicle or the like.

The glass sheet with a resin frame attached thereto 10 thus produced includes the solid thick wall part 16 having a high rigidity where the imaginary inscribe circle inscribed in the resin frame has a diameter of at least of 7 mm, with the result that the freedom design of the glass sheet with the resin frame attached thereto 10 is increased. In addition, it is possible to enhance the rigidity of the resin frame 14 per se without using a metal or resin insert. Further, although the glass sheet with a resin frame attached thereto 10 as an exterior part for automobiles is required to have a visible surface difficult to form in many cases, such a visible surface can satisfy the requirements by providing the resin frame 14 with the thick wall part 16 even in such cases.

The compressed air as the pressing structure presses at least a portion of the invisible surface 36 of the thick wall part 16. Thus, it is not only possible to effectively control the generation of a sink mark on the thick wall part but also easy to obtain a desired shape of visible surface because the pressed mark caused by the compressed air is located on a side of the thick wall part 16 with the invisible surface 36 thereon.

The position of the nozzle 38 for injecting the compressed air as the pressing structure is not limited to a position located laterally of a resin frame 14 as shown in Fig. 5 as long as the nozzle faces the invisible surface of the resin frame. The nozzle may face a lower side (for example, the port is located in the die 32 shown in Fig. 5) or a lateral oblique side (for example, the port is located in the die 30 shown in Fig. 5) of the resin frame 14. The nozzle 38 may be located at a single position or each of plural positions, and the number of the nozzles may be properly modified, depending on the shape of the resin frame 14 or the position, the length and so on of the thick wall part 16.

Fig. 7 is a cross-sectional view showing essential parts of the mold 40 according to another embodiment as the device for producing a glass sheet with a resin frame attached thereto 10. Explanation will be made in such a way that like reference numerals denotes parts identical or similar to those of the mold 20 shown in Fig. 5.

The mold 40 shown in Fig. 7 is different from the mold 20 shown in Fig. 5 in that the mold 40 shown in Fig. 7 uses a bar-shaped pressing member 42 as the pressing structure while the mold 20 shown in Fig. 5 uses a compressed air as the pressing structure.

In other words, in the mold 40 shown in Fig. 7, no nozzle 38 (see Fig. 5) is provided to a die 28, and the pressing member 42 is protruded into a cavity space 22 from an invisible surface forming part 44 of a die 32 such that an unsolidified synthetic resin material 24 injected into the cavity space 22 is pressed against a visible surface forming part 34 of a die 26.

It is possible to obtain the same function and effect as the mold 20 shown in Fig. 5 by the pressing function of the pressing member 42.

Specifically, the pressing member 42 presses at least a portion of an invisible surface 44 of a thick wall part 16. Thus, it is not only possible to effectively control the generation of sink mark on the thick wall part 16 but also easy to obtain a desired shape of visible surface because the pressed mark caused by the pressing member is located on an invisible surface side of the thick wall part 16.

When the pressing member 42 is applied, it is preferred to press the synthetic resin material 24 toward the visible surface forming part 34 by the pressing member in a pressure keeping step and a cooling step during injection molding such that the inner pressure of the synthetic resin material before solidification is from 2 to 25 MPa. Thus, the solid thick wall part 16 having no sink mark can be provided to the resin frame 14 which has been solidified on the side of the die with the visible surface forming part thereon.

The production process by use of compressed air shown in Fig. 5 and the production process by use of a pressing member shown in Fig. 7 may be combined to apply not only the pressing force caused by the compressed air but also the pressing force caused by the pressing member 42 to a synthetic resin material 24 injected into a cavity space 22 in order to form a thick wall part 16. Although the bar-shaped (cylindrical shape) of pressing member 42 is used as one example in the above-mentioned embodiment, the pressing member 42 is not limited to have a bar-shape, and the end of the pressing member in contact with the synthetic resin material 24 may be elliptical or rectangular, depending on the shape of the resin frame 14 or the position, the length and so on of the thick wall part 16.

In accordance with the present invention, it is possible to provide a plate-like body with a resin frame attached thereto in such a state that the resin frame is capable of preventing a sink mark from being caused during molding the resin frame, and having an excellent visible surface thereon and an increased freedom of design, the plate-like body being particularly useful as an automobile part.

Reference is made to Japanese Patent Application No. 2012-087787 filed on April 6, 2012 including specification, claims, drawings and summary.
10: glass sheet with a resin frame attached thereto (plate-like body with a resin frame attached thereto),
12: glass sheet (plate-like body)
14: resin frame
16: thick wall part
18: non-thick wall part
20: mold
22: cavity space
24: synthetic resin material
26, 28, 30 and 32: die
34: visible surface
36: invisible surface
38: nozzle
40: mold
42: pressing member
44: invisible surface

## Claims

1. A plate-like body with a resin frame attached thereto (10), which has the resin frame (14) integrally formed on a peripheral portion of the plate-like body (12) by injection molding,
wherein the resin frame (14) includes a solid thick wall part (16) with an imaginary inscribed circle inscribed in the resin frame (14), and
wherein the imaginary inscribed circle has a diameter of at least of 7 mm, **characterized in that** the resin frame (14) has a pressed mark at least partly formed on an invisible surface side thereof.

2. The plate-like body (10) according to Claim 1, wherein the thick wall part (16) has a visible surface (34) side.

3. The plate-like body (10) according to Claim 1 or 2, wherein the thick wall part (16) has a pressed mark at least partly formed on an invisible surface (36, 44) side thereof.

4. The plate-like body (10) according to any one of Claims 1 to 3, wherein a length of the thick wall part (16) is at least 10 mm.

5. The plate-like body (10) according to any one of Claims 1 to 4, wherein the thick wall part (16) is partly formed on a part of the resin frame (14) formed on one side of the plate-like body (12).

6. The plate-like body (10) according to Claim 5, wherein a part of the resin frame (14) formed on the one side of the plate-like body (12) has the thick wall part (16) occupying at most 50% of the length of the one side.

7. The plate-like body (10) according to Claim 5 or 6, wherein a part of the resin frame (14) formed on the one side of the plate-like body (12) has a solid non-thick wall part (18) where an imaginary inscribed circle inscribed in the resin frame (14) has a diameter of less than 7 mm, and the thick wall part (16) merges the non-thick wall part (18) so as to have a wall thickness changing in a direction parallel to the one side, such that a ratio of the diameter of the imaginary inscribed circle inscribed in the thick wall part (16) to the diameter of the imaginary inscribed circle inscribed in the non-thick wall part (18) is greater than 2.

8. The plate-like body (10) according to Claim 7, wherein a thickness of the non-thick wall part (18) and a thickness of the thick wall part (16) change within a range of at most 20 mm in a length direction of the one side of the resin frame (14).

9. The plate-like body (10) according to any one of Claims 5 to 8, wherein the thick wall part (16) of the resin frame (14) formed on the one side of the plate-like body (12) has an inclined plane formed thereon so as to have an angle α of at least 60 degrees to a surface of the plate-like body (12) in a direction parallel to the one side.

10. A process for producing a plate-like body with a resin frame attached thereto (10), including employing a mold (20, 40) to sandwich a portion of a plate-like body (12) close to a peripheral portion thereof in order to form a cavity space (22) between an inner surface of the mold (20, 40) and the peripheral portion of the plate-like body (12); injecting a synthetic resin material (24) into the cavity space (22); and solidifying the synthetic resin material (24), followed by opening the mold (20, 40) to produce the plate-like body with a resin frame integrally formed thereon (10);
wherein the process further comprises setting the volume of the cavity space (22) such that the resin frame (14) solidified in the cavity space (22) includes a solid thick wall part (16) where an imaginary inscribed circle inscribed in the resin frame (14) has a diameter of at least of 7 mm, and
wherein the mold (20, 40) for forming the cavity space (22) has a visible surface (34) forming part and an invisible surface (36, 44) forming part on an inner surface of the cavity space (22);
**characterized in that** the process further comprises forming the resin frame (14) with a pressed mark so as to include the solid thick wall part (16) with the imaginary inscribed circle inscribed in the resin frame (14) having the diameter of at least of 7 mm by pressing at least a portion of the invisible surface of the synthetic resin material (24) in the cavity space (22) from a side of the mold (20, 40) with the invisible surface (36, 44) forming part thereon by a pressing structure before the synthetic resin material (24) injected into the cavity space (22) is solidified.

11. The process according to Claim 10, further pressing at least a portion of the invisible surface (36, 44) of the thick wall part (16) by the pressing structure.

12. The process according to Claim 10 or 11, wherein the pressing is performed from a side of the mold (20, 40) with the invisible surface (36, 44) forming part of the synthetic resin material (24) toward a side of the mold (20, 40) with the visible surface (34) forming part thereon.

13. The process according to any one of claims 10 to 12, wherein the process further comprises cooling the synthetic resin material (24) from a visible surface side thereof.

14. The process according to any one of claims 10 to 13, wherein the process further comprises cooling the synthetic resin material (24) such that the inner pressure of the synthetic resin material is from 2 to 25 MPa.

## Patentansprüche

1. Plattenartiger Körper mit einem daran befestigten Harzrahmen (10), welcher den Harzrahmen (14) integral auf einem Umfangsabschnitt des plattenartigen Körpers (12) durch Spritzgießen ausgebildet hat,
wobei der Harzrahmen (14) einen festen, dickwandigen Teil (16) mit einem imaginär eingeschriebenen Kreis, der in den Harzrahmen (14) eingeschrieben ist, enthält und
wobei der imaginär eingeschriebene Kreis einen Durchmesser von mindestens 7 mm aufweist,
**dadurch gekennzeichnet, dass** der Harzrahmen (14) eine gepresste Markierung aufweist, die zumindest teilweise auf einer unsichtbaren Oberflächenseite davon ausgebildet ist.

2. Plattenartiger Körper (10) nach Anspruch 1, wobei der dickwandige Teil (16) eine sichtbare Oberflächen-(34)-Seite aufweist.

3. Plattenartiger Körper (10) nach Anspruch 1 oder 2, wobei der dickwandige Teil (16) eine gepresste Markierung aufweist, die zumindest teilweise auf einer unsichtbaren Oberflächen-(36, 44)-Seite davon ausgebildet ist.

4. Plattenartiger Körper (10) nach einem der Ansprüche 1 bis 3, wobei eine Länge des dickwandigen Teils (16) mindestens 10 mm beträgt.

5. Plattenartiger Körper (10) nach einem der Ansprüche 1 bis 4, wobei der dickwandige Teil (16) teilweise auf einem Teil des Harzrahmens (14) ausgebildet ist, der auf einer Seite des plattenartigen Körpers (12) ausgebildet ist.

6. Plattenartiger Körper (10) nach Anspruch 5, wobei ein Teil des auf der einen Seite des plattenartigen Körpers (12) ausgebildeten Harzrahmens (14) den dickwandigen Teil (16) aufweist, der höchstens 50% der Länge der einen Seite einnimmt.

7. Plattenartiger Körper (10) nach Anspruch 5 oder 6, wobei ein Teil des auf der einen Seite des plattenartigen Körpers (12) ausgebildeten Harzrahmens (14) einen festen, nicht-dickwandigen Teil (18) aufweist, wo ein imaginär eingeschriebener Kreis, der in den Harzrahmen (14) eingeschrieben ist, einen Durchmesser von weniger als 7 mm aufweist, und sich der dickwandige Teil (16) mit dem nicht-dickwandigen Teil (18) so zusammenfügt, dass sich eine Wanddicke so in einer Richtung parallel zu der einen Seite ändert, dass ein Verhältnis des Durchmessers des imaginär eingeschriebenen Kreises, der in den dickwandigen Teil (16) eingeschrieben ist, zu dem Durchmesser des imaginär eingeschriebenen Kreises, der in dem nicht-dickwandigen Teil (18) eingeschrieben ist, größer als 2 ist.

8. Plattenartiger Körper (10) nach Anspruch 7, wobei sich eine Dicke des nicht-dickwandigen Teils (18) und eine Dicke des dickwandigen Teils (16) innerhalb eines Bereichs von höchstens 20 mm in einer Längenrichtung der einen Seite des Harzrahmens (14) ändern.

9. Plattenartiger Körper (10) nach einem der Ansprüche 5 bis 8, wobei der dickwandige Teil (16) des Harzrahmens (14), der auf der einen Seite des plattenartigen Körpers (12) ausgebildet ist, eine geneigte Ebene aufweist, die so darauf ausgebildet ist, dass sie einen Winkel α von mindestens 60 Grad zu einer Oberfläche des plattenartigen Körpers (12) in einer Richtung parallel zu der einen Seite aufweist.

10. Verfahren zur Herstellung eines plattenartigen Körpers mit einem daran befestigten Harzrahmen (10), beinhaltend das Verwenden einer Form (20, 40), um einen Abschnitt eines plattenartigen Körpers (12) in der Nähe eines Umfangsabschnitts davon dazwischen einzuschieben, um einen Hohlraum (22) zwischen einer Innenfläche der Form (20, 40) und dem Umfangsabschnitt des plattenartigen Körpers (12) zu bilden; das Einspritzen eines Kunstharzmaterials (24) in den Hohlraum (22); und das Verfestigen des Kunstharzmaterials (24), gefolgt von dem Öffnen der Form (20, 40), zur Herstellung des plattenartigen Körpers mit einem integral darauf ausgebildeten Harzrahmen (10);
wobei das Verfahren ferner das Einstellen des Volumens des Hohlraumes (22) umfasst, so dass der in dem Hohlraum (22) verfestigte Harzrahmen (14) einen festen dickwandigen Teil (16) einschließt, wo ein imaginär eingeschriebener Kreis, der in den Harzrahmen (14) eingeschrieben ist, einen Durchmesser von mindestens 7 mm aufweist, und
wobei die Form (20, 40) zum Bilden des Hohlraumes (22) einen sichtbare-Oberfläche-(34)-bildenden Teil und einen unsichtbare-Oberfläche-(36, 44)-bildenden Teil auf einer Innenfläche des Hohlraumes (22) aufweist;
**dadurch gekennzeichnet, dass** das Verfahren ferner das Bilden des Harzrahmens (14) mit einer gepressten Markierung umfasst, um den festen dickwandigen Teil (16) mit dem imaginär eingeschriebenen Kreis, der in den Harzrahmen (14) eingeschrieben ist, mit einem Durchmesser von mindestens 7 mm einzuschließen, durch das Pressen mindestens eines Teils der unsichtbaren Oberfläche des Kunstharzmaterials (24) in den Hohlraum (22) von einer Seite der Form (20, 40) mit dem unsichtbare-Oberfläche-(36, 44)-bildenden Teil darauf mittels einer Pressstruktur, bevor das in den Hohlraum (22) eingespritzte Kunstharzmaterial (24) verfestigt wird.

11. Verfahren nach Anspruch 10, wobei ferner mindestens ein Teil der unsichtbaren Oberfläche (36, 44) des dickwandigen Teils (16) durch die Pressstruktur gepresst wird.

12. Verfahren nach Anspruch 10 oder 11, wobei das Pressen von einer Seite der Form (20, 40) mit dem unsichtbare-Oberfläche-(36, 44)-bildenden Teil des Kunstharzmaterials (24) zu einer Seite der Form (20, 40) mit dem sichtbare-Oberfläche-(34)-bildenden Teil darauf durchgeführt wird.

13. Verfahren nach einem der Ansprüche 10 bis 12, wobei das Verfahren ferner das Kühlen des Kunstharzmaterials (24) von einer sichtbaren Oberflächenseite davon umfasst.

14. Verfahren nach einem der Ansprüche 10 bis 13, wobei das Verfahren ferner das Kühlen des Kunstharzmaterials (24) derart, dass der Innendruck des Kunstharzmaterials 2 bis 25 MPa beträgt, umfasst.

## Revendications

1. Corps en forme de plaque (10) auquel est fixé un cadre en résine, le cadre en résine (14) étant formé d'une seule pièce sur une partie périphérique du corps en forme de plaque (12) par moulage par injection,
le cadre en résine (14) comprenant une partie à paroi épaisse solide (16) avec un cercle imaginaire inscrit dans le cadre en résine (14), et
le cercle imaginaire inscrit ayant un diamètre d'au moins 7 mm,
**caractérisé en ce que** le cadre en résine (14) présente une marque comprimée qui est formée au moins en partie sur un côté à surface invisible.

2. Corps en forme de plaque (10) selon la revendication 1, dans lequel la partie à paroi épaisse (16) a un côté à surface visible (34).

3. Corps en forme de plaque (10) selon la revendication 1 ou 2, dans lequel la partie à paroi épaisse (16) présente une marque comprimée qui est formée au moins en partie sur un côté à surface invisible (36, 44).

4. Corps en forme de plaque (10) selon l'une quelconque des revendications 1 à 3, dans lequel une longueur de la partie à paroi épaisse (16) est d'au moins 10 mm.

5. Corps en forme de plaque (10) selon l'une quelconque des revendications 1 à 4, dans lequel la partie à paroi épaisse (16) est formée en partie sur une partie du cadre en résine (14) formé sur un côté du corps en forme de plaque (12).

6. Corps en forme de plaque (10) selon la revendication 5, dans lequel la partie à paroi épaisse (16) d'une partie du cadre en résine (14) formé sur ledit côté du corps en forme de plaque (12) occupe 50 % au maximum dudit côté.

7. Corps en forme de plaque (10) selon la revendication 5 ou 6, dans lequel une partie du cadre en résine (14) formé sur ledit côté du corps en forme de plaque (12) comporte une partie à paroi solide non épaisse (18) sur laquelle un cercle imaginaire inscrit dans le cadre en résine (14) a un diamètre de moins de 7 mm, et la partie à paroi épaisse (16) rejoint la partie à paroi non épaisse (18) de manière à présenter un changement d'épaisseur de paroi dans un sens parallèle audit côté, de telle sorte qu'un rapport du diamètre du cercle imaginaire inscrit dans la partie à paroi épaisse (16) sur le diamètre du cercle imaginaire inscrit dans la partie à paroi non épaisse (18) soit supérieur à 2.

8. Corps en forme de plaque (10) selon la revendication 7, dans lequel une épaisseur de la partie à paroi non épaisse (18) et une épaisseur de la partie à paroi épaisse (16) varient à l'intérieur d'une plage de l'ordre de 20 mm au maximum dans le sens de la longueur dudit côté du cadre en résine (14).

9. Corps en forme de plaque (10) selon l'une quelconque des revendications 5 à 8, dans lequel la partie à paroi épaisse (16) du cadre en résine (14) formé sur ledit côté du corps en forme de plaque (12) présente, formée sur elle, une plan incliné de manière à présenter un angle α d'au moins 60 degrés par rapport à une surface du corps en forme de plaque (12) dans un sens parallèle audit côté.

10. Procédé pour produire un corps en forme de plaque (10) auquel est fixé un cadre en résine, comprenant l'utilisation d'un moule (20, 40) pour prendre en sandwich une partie d'un corps en forme de plaque (12) proche d'une partie périphérique du moule afin de former un espace de cavité (22) entre une surface intérieure du moule (20, 40) et ladite partie périphérique du corps de forme de plaque (12) ; l'injection d'un matériau en résine synthétique (24) dans l'espace de cavité (22) ; et la solidification du matériau en résine synthétique (24), suivie par l'ouverture du moule (20, 40) pour produire le corps en forme de plaque avec un cadre en résine (10) formé d'une seule pièce sur celui-ci ;
le procédé comprenant également la fixation du volume de l'espace de cavité (22) de telle sorte que le cadre en résine (14) solidifié dans ledit espace de cavité (22) comprenne une partie à paroi épaisse solide (16) dont le cercle inscrit dans le cadre en résine (14) a un diamètre d'au moins 7 mm, et
le moule (20, 40) pour former l'espace de cavité (22) présentant une partie formant surface visible (34) et une partie formant surface invisible (36, 44) sur une surface intérieure dudit espace de cavité (22) ;
**caractérisé en ce que** le procédé comprend également la formation du cadre en résine (14) avec une marque comprimée, de manière à comprendre la partie à paroi épaisse solide (16) avec le cercle imaginaire, inscrit dans ledit cadre en résine (14), qui présente le diamètre d'au moins 7 mm, en comprimant une partie au moins de la surface invisible du matériau en résine synthétique (24) dans l'espace de cavité (22) à partir d'un côté du moule (20, 40) avec la partie formant surface invisible (36, 44), par une structure de compression, avant que le matériau en résine synthétique (24) injecté dans l'espace de cavité (22) soit solidifié.

11. Procédé selon la revendication 10, comprimant également une partie au moins de la surface invisible (36, 44) de la partie à paroi épaisse (16) par la structure de compression.

12. Procédé selon la revendication 10 ou 11, selon lequel la compression est réalisée à partir d'un côté du moule (20, 40) avec la partie formant surface invisible (36, 44) du matériau en résine synthétique (24) vers un côté du moule (20, 40) avec la partie formant surface visible (34).

13. Procédé selon l'une quelconque des revendications 10 à 12, comprenant également le refroidissement du matériau en résine synthétique (24) à partir de son côté à surface visible.

14. Procédé selon l'une quelconque des revendications 10 à 13, comprenant également le refroidissement du matériau en résine synthétique (24) de telle sorte que la pression intérieure du matériau en résine synthétique soit de 2 à 25 MPa.
